Europäisches Patentamt

European Patent Office

Office européen des brevets

(19)

(11) Veröffentlichungsnummer : **0 447 793 B1**

## (12) EUROPÄISCHE PATENTSCHRIFT

(45) Veröffentlichungstag der Patentschrift :
18.10.95 Patentblatt 95/42

(51) Int. Cl.⁶ : **G08B 13/24**

(21) Anmeldenummer : **91102051.9**

(22) Anmeldetag : **14.02.91**

(54) **Deaktivierbares Sicherungsetikett.**

(30) Priorität : **21.03.90 DE 4009010**

(43) Veröffentlichungstag der Anmeldung :
25.09.91 Patentblatt 91/39

(45) Bekanntmachung des Hinweises auf die
Patenterteilung :
18.10.95 Patentblatt 95/42

(84) Benannte Vertragsstaaten :
**BE DE FR GB IT NL SE**

(56) Entgegenhaltungen :
**EP-A- 0 093 281**

(56) Entgegenhaltungen :
**EP-A- 0 216 457**
**EP-A- 0 226 812**
**EP-A- 0 316 811**
**US-A- 4 120 704**

(73) Patentinhaber : **VACUUMSCHMELZE GMBH**
**Grüner Weg 37**
**Postfach 2253**
**D-63412 Hanau (DE)**

(72) Erfinder : **Emmerich, Kurt, Dr.**
**Im Sand 2**
**W-8755 Alzenau 3 (DE)**
Erfinder : **Roth, Ottmar**
**Am Schenkenrain 2**
**W-6466 Gründau 5 (DE)**

EP 0 447 793 B1

## Beschreibung

Die Erfindung betrifft ein deaktivierbares Sicherungsetikett für Diebstahlsicherungssysteme, bei denen ein weichmagnetischer Streifen ein in einer Prüfzone erzeugtes magnetisches Wechselfeld verändern und damit einen Alarm auslösen kann, bestehend aus mindestens zwei zu einem Laminat verbundenen ferromagnetischen Streifen, von denen mindestens einer aus weichmagnetischem Material mit hoher Permeabilität und niedriger Koerzitivfeldstärke besteht, während mindestens ein weiterer Streifen eine höhere Koerzitivfeldstärke aufweist.

Als Markierungselement für Diebstahlsicherungssysteme, die auf magnetischer Basis arbeiten, wird in der Regel ein länglicher weichmagnetischer Streifen verwendet, der in einer Schleuse am Ausgang des zu überwachenden Bereichs magnetisch detektiert wird. Dieser Streifen kann sowohl aus einem amorphen als auch aus einem kristallinen Material bestehen. Bevorzugt werden jedoch amorphe Streifen eingesetzt, da diese auch nach mechanischer Beanspruchung, wie z. B. Verbiegen oder Knicken noch ansprechen. Nach dem Bezahlen der Ware müssen die Sicherungsetiketten entweder von der Ware entfernt werden oder sie müssen anderweitig deaktiviert werden. Um eine Deaktivierung zu ermöglichen, werden die Etiketten zunehmend durch einen zusätzlich angebrachten magnetisch halbharten Werkstoff ergänzt. Zur Deaktivierung wird der magnetisch halbharte Werkstoff aufmagnetisiert, wodurch der Arbeitspunkt auf der Magnetisierungskurve des Weichmagneten so verschoben wird, daß durch das Sicherungsetikett in der Schleuse kein Alarm mehr ausgelöst wird.

Ein solches Sicherungsetikett ist aus der EP-OS 226 812 bekannt. Zur Deaktivierung wird dort ein Streifen aus einer Kobalt-Basis-Legierung eingesetzt, die zusätzlich Nickel und/ oder Eisen enthält und deren Koerzitivfeldstärke im Bereich zwischen 20 und 50 A/cm liegt, bei einer Remanenzinduktion von mehr als 1 T.

Aus der EP-OS 170 854 ist weiterhin bekannt, daß als deaktivierendes Element, d. h. als Streifen mit höherer Koerzitivfeldstärke für Sicherungsetiketten ein unter dem Warenzeichen CROVAC auf dem Markt befindliches Material geeignet ist. Hierbei handelt es sich um Eisen-Kobalt-Chrom-Legierungen, die konventionell hergestellt werden. Diese Legierungen sind zunächst duktil und können deshalb durch Walzen in Folienform hergestellt werden. Nach der magnetischen Aushärtung ist allerdings die Duktilität der Bänder deutlich reduziert, so daß insbesondere das Knicken eines mit einem solchen Band versehenen Etiketts zu einem Ausfall der Deaktivierung führen kann. Es ist bekannt, daß die magnetische Aushärtung von Eisen-Kobalt-Chrom durch eine spinodale Entmischung in eine stark ferromagnetische Fe-Co-reiche Phase und eine Fe-Cr-reiche Phase erfolgt, wodurch eine deutliche mechanische Härtung auftritt, die eine geringe Duktilität des konventionell hergestellten Materials zur Folge hat. Zwar ist es aus der EP-OS 216 457 weiterhin bekannt, daß Eisen-Chrom-Kobalt-Legierungen auch mittels bekannter Rascherstarrungstechnologien herstellbar sind, jedoch finden sich dort keine Angaben über die Duktilität der so hergestellten Bänder, bzw. auch keine Angaben ob und unter welchen zusätzlichen Bedingungen eine Verbesserung der Duktilität erzielt werden kann. Die durch Rascherstarrung erhaltenen Bänder werden dort ebenso wie die konventionell hergestellten in der Regel durch zusätzliches Walzen auf die gewünschte Enddicke gebracht. Als minimaler Wert der Banddicke werden 0,05 mm angegeben, da unterhalb dieses Wertes - bedingt durch Defekte - keine befriedigenden Eigenschaften erzielt werden könnten.

Aufgabe der Erfindung ist es, ein Sicherungsetikett anzugeben, das auch nach mechanischer Beanspruchung noch eine sichere Deaktivierung gestattet. Insbesondere soll für den Streifen hoher Koerzitivfeldstärke ein Material angegeben werden, das eine Duktilität aufweist, die vergleichbar ist zur Duktilität des Streifens hoher Permeabilität. Die Aufgabe wird bei einem gattungsgemäßen Sicherungsetikett dadurch gelöst, daß der Streifen mit höherer Koerzitivfeldstärke aus einer durch Rascherstarrung mit einer Abkühlgeschwindigkeit von mehr als $10^3$ K/s hergestellten, duktilen Legierung aus 10 bis 40 Gew.-% Chrom, 3 bis 25 Gew.-% Kobalt, bis zu einer Gesamtmenge von 10 Gew.-% Al, Mo, Nb, Si, Ta, Ti, V, W und / oder Zr, Rest Eisen sowie üblichen Verunreinigungen besteht, daß die mittlere Korngröße in diesem Streifen weniger als 30 μm beträgt und daß das Gefüge dieses Streifens praktisch frei von gamma- und / oder sigma-Phasenausscheidungen ist.

Um die hohe Duktilität der Eisen-Kobalt-Chrom-Streifen zu erzielen, werden diese mittels einer an sich bekannten Rascherstarrungstechnologie direkt aus der Schmelze hergestellt. Hierdurch wird auch erreicht, daß das Gefüge der Streifen praktisch frei von gamma- und / oder sigma-Phasenausscheidungen ist. Die Kombination aus Ausscheidungsfreiheit und Feinkörnigkeit mit Korngrößen von weniger als 30 μm führt überraschenderweise auch im magnetisch ausgehärteten Zustand zu einer hohen Duktilität der Bänder. Um die benötigte Feinkörnigkeit zu erzielen, ist es erforderlich, daß die Streifen direkt aus der Schmelze in der endgültigen Dicke von vorzugsweise weniger als 100 μm und insbesondere weniger als 50 μm hergestellt werden, ohne daß ein zusätzlicher Walzschritt durchgeführt wird. Die erfindungsgemäßen Streifen höherer Koerzitivfeldstärke lassen sich in der Regel knicken, ohne zu brechen. Sie sind daher insbesondere geeignet zur Verwendung zusammen mit einem Streifen hoher Permeabilität aus einem amorphen magnetostriktionsarmen Material, da diese Materialien ebenfalls eine hohe Duktilität aufweisen. Die erfindungsgemäßen Sicherungsetiketten behalten auch bei starker mechanischer Beanspruchung - wie sie zum Beispiel durch Verbiegen und Knicken auftritt - noch ihre Funktion. Insbesondere sollte daher die Dicke des Streifens höherer Koerzitivkraft nicht mehr als das dreifache der Dicke des Streifens hoher Permeabilität betragen.

Die Erfindung wird nachfolgend anhand der Ausführungsbeispiele und der Figuren näher erläutert. Es zeigen:

Fig. 1:     einen Schliff eines Eisen-Chrom-Kobalt-Streifens

Fig. 2:     eine transmissionselektronenmikroskopische Aufnahme eines Eisen-Chrom-Kobalt-Streifens

Fig. 3:     das spinodale Entmischungsgefüge einer Eisen-Chrom-Kobalt-Legierung.

Ausführungsbeispiele

Mit dem an sich bekannten Einwalzenverfahren wurden raschabgeschreckte Eisen-Kobalt-Chrom-Basis-Legierungen mit einer Abkühlgeschwindigkeit von mindestens $10^3$ K/s in Bandform hergestellt. Als vorteilhaft erweist es sich, wenn die Bänder direkt aus der Schmelze in der bevorzugten Breite von nicht mehr als 10 mm und insbesondere von nicht mehr als 5 mm hergestellt werden. Das kostenintensive Schneiden eines breiteren Bandes kann dann entfallen. Die Banddicke wurde zwischen 20 und 100 μm eingestellt.

Auf einer Einwalzengießanlage mit einer Cu-Basis-Gießwalze des Durchmesssers 40 mm wurde beispielsweise ein 5 mm breites Band der Legierungszusammensetzung Fe-10,5%Co-27,5%Cr mit einer Banddicke von 40 μm unter Verwendung folgender Prozeßparameter hergestellt:

| | |
|---|---|
| Geschwindigkeit Gießwalze | 25 m/s |
| Düsendimension | Ø 4,5 mm |
| Auspreßdruck | 200 mbar |
| Abstand Düse- Gießwalze | 100 μm . |

Die Bestandteile neben Eisen sind für einige erfindungsgemäße Bänder in Tabelle 1 aufgelistet. Neben den aufgeführten Elementen enthalten die Legierungen übliche Verunreinigungen, darunter z. B. bis zu etwa 0,5 % Mangan als Verarbeitungszusatz. Die Bänder wiesen alle eine sehr hohe Duktilität auf, d. h. sie ließen sich knicken, ohne zu brechen. Als besonders geeignet erwiesen sich hierbei Bänder mit einem Cr-Gehalt von weniger als 30 Gew.-% und einem Co-Gehalt von weniger als 15 Gew.-%. Der Gehalt an den wahlweise zugesetzten Elementen Al, Mo, Nb, Si, Ta, Ti, V, W und/oder Zr soll vorzugsweise nicht mehr als insgesamt 5 Gew.-% betragen.

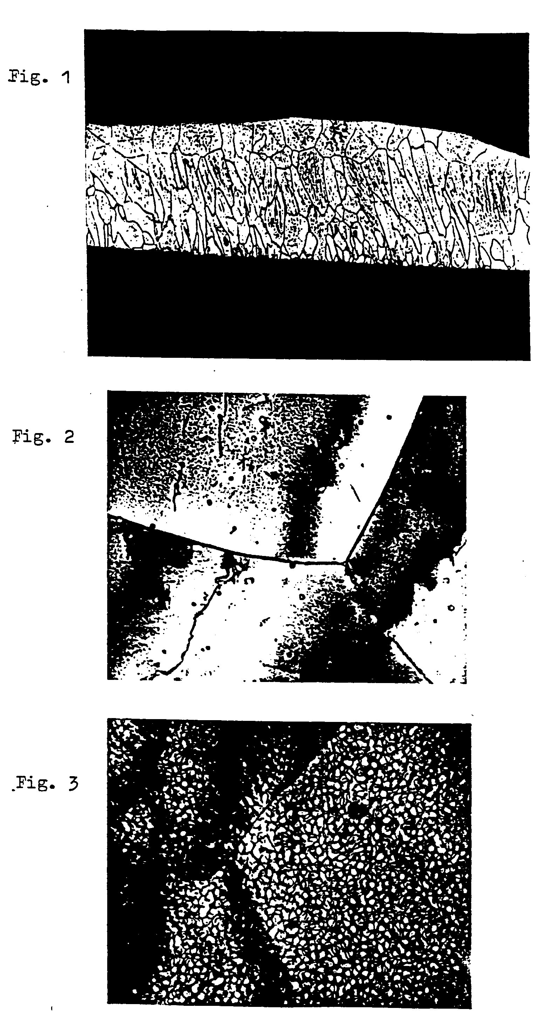

An ausgewählten Legierungen wurden Gefügeuntersuchungen durchgeführt. In Figur 1 ist ein Schliff eines Eisen-29,5 % Chrom-23 % Kobalt-Bandes dargestellt, in dem das stengelkristalline Gefüge mit Korndurchmes-sern von ca. 5 μm zu erkennen ist.

Fig. 2 zeigt eine transmissionselektronenmikroskopische Aufnahme dieses Bandes, aus der ersichtlich ist, daß auch an den Korngrenzen keine Ausscheidungen von gamma- und / oder sigma-Phasen vorhanden sind.

Durch eine an sich bekannte mehrstufige Wärmebehandlung im Temperaturbereich von 500 °C bis 700 °C wird in den Bändern das spinodale Entmischungsgefüge eingestellt. Das entstehende Gefüge ist für die oben bereits genannte Eisen-Chrom-Kobalt-Legierung in Fig. 3 dargestellt. Die durch diese magnetische Aushärtung erzielten Magnetwerte sind für einige Legierungsbeispiele in Tabelle 2 aufgeführt. Auch die magnetisch ausgehärteten Bänder wurden hinsichtlich ihrer Duktilität untersucht. Bis auf die Legierung Eisen-23,0 Kobalt-27,0 Chrom ließen sich alle Bänder der in Tabelle 2 aufgeführten Legierungsbeispiele knicken, d. h. auf einen Radius r = 0 biegen, ohne zu brechen. Konventionell hergestellte Bänder der Zusammensetzung Eisen-23 Kobalt-27,5 Chrom und Eisen-10,5 Kobalt-27,5 Chrom, die als Vergleichsbeispiele untersucht wurden, waren dagegen sehr spröde und brachen beim Knicken.

Aus den vorgenannten Bändern wurden Streifen hergestellt, die mit einem weichmagnetischen Streifen hoher Permeabilität zu einem Laminat kombiniert wurden. Der weichmagnetische Streifen weist vorzugsweise eine Breite von weniger als 3 mm, eine Dicke von weniger als 40 μm und eine Länge von 50 bis 100 mm auf. Als weichmagnetische Streifen wurden amorphe Materialien hoher Duktilität verwendet, die unter dem Warenzeichen VITROVAC im Handel erhältlich sind. Die untersuchten Kombinationen von weichmagnetischen Streifen hoher Permeabilität und Streifen hoher Koerzitivfeldstärke sind in Tabelle 3 aufgelistet. In allen Fällen konnte eine sichere Deaktivierung der Sicherungsetiketten erreicht werden.

# T a b e l l e   1

Legierungsbestandteile (neben Fe)

| Chrom | Kobalt | sonst. Zusätze |
|-------|--------|----------------|
| 27,5 | 10,5 | – |
| 29,5 | 23,0 | – |
| 10,0 | 10,5 | – |
| 15,0 | 28,0 | – |
| 35,5 | 10,5 | – |
| 34 | 20 | – |
| 36 | 31 | – |
| 26 | 10,5 | – |
| 24 | 10,5 | – |
| 26 | 9 | – |
| 24 | 9 | – |
| 26 | 7 | – |
| 22 | 10,5 | – |
| 23 | 10,5 | 3 Mo |
| 23 | 18 | 2 Mo |
| 27 | 15 | 8 Mo |
| 25 | 10,5 | 3 Mo   1,2 Si |
| 23 | 15 | 2 V   0,4 Nb |
| 27,5 | 23 | 3 Ta   1 Al |
| 27,5 | 22 | 1 Mo   2 Ta   0,5 Ti |
| 27,5 | 10,5 | 4 W |
| 27,5 | 10,5 | 8 W |
| 27,5 | 10,5 | 3 W   2 Zr |
| 29,5 | 23 | 3 Mo   2 W   0,7 Si |

## T a b e l l e  2

| Charge | Fe | Co | Cr | Bs(T) | Br(T) | Hc(A/cm) |
|--------|------|------|------|-------|-------|----------|
| C 3374 | 47,5 | 23,0 | 27,5 | 1,20 | 0,78 | 530 |
| C 3294 | 62,0 | 10,5 | 27,5 | 1,20 | 0,95 | 320 |
| C 3297 | 62,0 | 27,5 | 10,5 | 1,30 | 1,05 | 220 |
| C 5214 | 63,5 | 10,5 | 26,0 | 1,46 | 1,15 | 220 |
| C 5215 | 65,5 | 10,5 | 24,0 | 1,50 | 1,08 | 260 |
| C 5226 | 65,0 | 9,0 | 26,0 | 1,46 | 0,80 | 130 |

## T a b e l l e  3

| Weichmagnetische Komponente | erfindungsgemäße deaktivierende Komponete |
|------------------------------|-------------------------------------------|
| 1. VITROVAC 4040<br>35 · 10 · 0,03 mm | C 5214<br>35 · 5 · 0,05 mm |
| 2. VITROVAC 6025<br>75 · 2,5 · 0,3mm | C 5215<br>75 · 3 · 0,05 mm |
| 3. VITROVAC 6025<br>75 · 2,5 · 0,3 mm | C 5226<br>4 Stücke<br>10 · 5 · 0,05 mm |
| 4. VITROVAC 6030<br>50 · 1 · 0,025 mm | C 3297<br>50 · 8 · 0,04 mm |
| 5. VITROVAC 6006<br>30 · 1 · 0,02 mm | C 5226<br>3 Stücke<br>8 · 5 · 0,04 mm |

**Patentansprüche**

1. Deaktivierbares Sicherungsetikett für Diebstahlsicherungssysteme, bei denen ein weichmagnetischer Streifen ein in einer Prüfzone erzeugtes magnetisches Wechselfeld verändern und damit einen Alarm auslösen kann, bestehend aus mindestens zwei zu einem Laminat verbundenen ferromagnetischen Streifen, von denen mindestens einer aus weichmagnetischem Material mit hoher Permeabilität und niedriger Koerzitivfeldstärke besteht, während mindestens ein weiterer Streifen eine höhere Koerzitivfeldstärke aufweist, **dadurch gekennzeichnet**, daß der Streifen mit höherer Koerzitivfeldstärke aus einer durch Rascherstarrung mit einer Abkühlgeschwindigkeit von mehr als $10^3$ K/s hergestellten, duktilen Legierung aus 10 bis 40 Gew.-% Chrom, 3 bis 25 Gew.-% Kobalt, bis zu einer Gesamtmenge von 10 Gew.-% Al, Mo, Nb, Si, Ta, Ti, V, W und/oder Zr, Rest Eisen sowie üblichen Verunreinigungen besteht, daß die mittlere Korngröße in diesem Streifen weniger als 30 μm beträgt und daß das Gefüge dieses Streifens praktisch frei von gamma- und / oder sigma-Phasenausscheidungen ist.

2. Sicherungsetikett nach Patentanspruch 1, **dadurch gekennzeichnet**, daß sich der Streifen höherer Koerzitivfeldstärke knicken läßt, ohne zu brechen.

3. Sicherungsetikett nach den Anspruchen 1 oder 2, **dadurch gekennzeichnet**, daß die Dicke des Streifens höherer Koerzitivkraft nicht mehr als das Dreifache der Dicke des Streifens hoher Permeabilität beträgt.

4. Sicherungsetikett nach einem der vorhergehenden Ansprüche, **dadurch gekennzeichnet**, daß der Streifen mit hoher Permeabilität aus einem amorphen, magnetostriktionsarmen Material besteht und daß beide Streifen eine Dicke von weniger als 100 μm aufweisen.

5. Sicherungsetikett nach einem der vorhergehenden Ansprüche, **dadurch gekennzeichnet**, daß der Streifen höherer Koerzitivfeldstärke eine Dicke von weniger als 50 μm aufweist.

6. Sicherungsetikett nach einem der vorhergehenden Ansprüche, **dadurch gekennzeichnet**, daß der Streifen höherer Koerzitivkraft und/oder der Streifen mit hoher Permeabilität eine Breite von nicht mehr als 10 mm aufweist und daß der Streifen direkt aus der Schmelze in dieser Breite hergestellt ist.

7. Sicherungsetikett nach Anspruch 6, **dadurch gekennzeichnet**, daß die Breite nicht mehr als 5 mm beträgt.

8. Sicherungsetikett nach Patentanspruch 1, **dadurch gekennzeichnet**, daß im Streifen höherer Koerzitivfeldstärke die mittlere Korngröße weniger als 10 μm beträgt.

9. Sicherungsetikett nach Patentanspruch 1, **gekennzeichnet durch** einen Chromgehalt von weniger als 30 Gew.-% und einen Kobaltgehalt von weniger als 15 Gew.-% im Streifen höherer Koerzitivfeldstärke.

10. Sicherungsetikett nach Patentanspruch 1, **dadurch gekennzeichnet**, daß der Streifen höherer Koerzitivfeldstärke nicht mehr als insgesamt 5 Gew.-% Al, Mo, Nb, Si, Ta, Ti, V, W und / oder Zr enthält.

**Claims**

1. Deactivatable security label for anti-theft systems in which a soft magnetic strip can change an alternating magnetic field generated in a test zone and thus trigger an alarm, consisting of at least two ferromagnetic strips which are joined together in a laminate and at least one of which consists of a soft magnetic material with high permeability and low coercive field strength, while at least one further strip exhibits a higher coercive field strength, characterised in that the strip with the higher coercive field strength is made of a ductile alloy produced by rapid solidification with a cooling rate of more than $10^3$ K/s and consisting of 10 to 40 % by weight chromium, 3 to 25% by weight cobalt, up to a total of 10% by weight Al, Mo, Nb, Si, Ta, Ti, V, W, and/or Zr, with the remainder iron and the usual impurities, in that the mean grain size in this strip is less than 30 μm and in that the structure of this strip is practically free of gamma and/or sigma phase separations.

2. Security label according to patent claim 1, characterised in that the strip with the higher coercive field strength can be folded without breaking.

3. Security label according to claims 1 or 2, characterised in that the thickness of the strip with the higher coercive force is no more than three times the thickness of the strip with the high permeability.

**4.** Security label according to one of the preceding claims, characterised in that the strip with the high permeability is made of an amorphous, low-magnetostriction material and in that both strips exhibit a thickness of less than 100 μm.

**5.** Security label according to one of the preceding claims, characterised in that the strip with the higher coercive field strength exhibits a thickness of less than 50 μm.

**6.** Security label according to one of the preceding claims, characterised in that the strip with the higher coercive force and/or the strip with the high permeability exhibits a breadth of no more than 10 mm and in that the strip is produced directly from the melt to this breadth.

**7.** Security label according to claim 6, characterised in that the breadth is no more than 5 mm.

**8.** Security label according to patent claim 1, characterised in that the mean grain size in the strip with the higher coercive field strength is less than 10 μm.

**9.** Security label according to patent claim 1, characterised by a chromium content of less than 30% by weight and a cobalt content of less than 15% by weight in the strip with the higher coercive field strength.

**10.** Security label according to patent claim 1, characterised in that the strip with the higher coercive field strength contains no more than a total of 5% by weight Al, Mo, Nb, Si, Ta, Ti V, W and/or Zr.

## Revendications

**1.** Etiquette de sécurité désactivable pour systèmes de protection antivol, dans lesquels une bande à magnétisme doux peut modifier un champ variable magnétique obtenu dans une zone de contrôle et ainsi peut déclencher une alarme qui consiste en au moins deux bandes associées en un produit laminaire ferromagnétique, parmi lesquelles au moins une est formée d'un matériau à magnétisme doux ayant une perméabilité élevée et une intensité de champ coercitif faible alors qu'au moins une autre bande possède une intensité de champ coercitif plus élevée, caractérisée en ce que la bande ayant l'intensité de champ coercitif plus élevé consiste en un alliage ductile produit par solidification rapide avec une vitesse de refroidissement de plus de $10^3$ K/s à base de 10 à 40 % en poids de chrome, 3 à 25 % en poids de cobalt, jusqu'à une quantité totale de 10 % en poids d'Al, Mo, Nb, Si, Ta, Ti, V, W et/ou Zr, le reste étant du fer ainsi que des impuretés usuelles, en ce que la taille moyenne des grains dans ces bandes s'élève à moins de 30 μm et en ce que la structure de cette bande est pratiquement dépourvue de séparations de phase gamma et/ou sigma.

**2.** Etiquette de sécurité selon la revendications 1, caractérisée en ce que la bande d'intensité de champ coercitif plus élevée peut être pliée sans se rompre.

**3.** Etiquette de sécurité selon la revendication 1 ou 2, caractérisée en ce que l'épaisseur de la bande d'intensité coercitive plus élevée ne s'élève pas à plus de trois fois l'épaisseur de la bande de perméabilité élevée.

**4.** Etiquette de sécurité selon l'une des revendications précédentes, caractérisée en ce que la bande ayant la perméabilité élevée est formée d'un matériau amorphe pauvre en magnétostriction, et en ce que les deux bandes possèdent une épaisseur de moins de 100 μm.

**5.** Etiquette de sécurité selon l'une des revendications précédentes, caractérisée en ce que la bande d'intensité de champ coercitif plus élevée présente une épaisseur de moins de 50 μm.

**6.** Etiquette de sécurité selon l'une des revendications précédentes, caractérisée en ce que la bande d'intensité coercitive plus élevée et/ou la bande ayant une perméabilité élevée, possèdent une largeur inférieure à 10 mm et en ce que la bande est produite directement à partir du produit de fusion dans cette largeur.

**7.** Etiquette de sécurité selon la revendication 6, caractérisée en ce que la largeur ne s'élève pas à plus de 5 mm.

8. Etiquette de sécurité selon la revendication 1, caractérisée en ce que dans la bande d'intensité de champ coercitif plus élevée la taille moyenne de grains s'élève à moins de 10 μm.

9. Etiquette de sécurité selon la revendication 1, caractérisée par une teneur en chrome de moins de 30 % en poids et par une teneur en cobalt de moins de 15 % en poids dans la bande d'intensité de champ coercitif plus élevée.

10. Etiquette de sécurité selon la revendication 1, caractérisée en ce que la bande d'intensité de champ coercitif plus élevée ne renferme pas plus de au total 5 % en poids d'Al, Mo, Nb, Si, Ta, Ti, V, W et/ou Zr.

Fig. 1

Fig. 2

.Fig. 3